# EUROPÄISCHE PATENTSCHRIFT

(11) **EP 2 644 349 B1**
(45) Veröffentlichungstag und Bekanntmachung des Hinweises auf die Patenterteilung: **28.12.2016**
(21) Anmeldenummer: 13000287.6
(22) Anmeldetag: 21.01.2013
(51) Int. Cl.: B29C 43/36, B29C 70/46, B29C 51/08

(54) **Verfahren und Umformwerkzeug zur Herstellung eines im Wesentlichen schalenförmigen, faserverstärkten Kunststoffteils**
Process and forming tool for the production of essentially shell-shaped fibre-reinforced plastic parts
Procédé et outil de façonnage destiné à fabriquer un élément en matière synthétique essentiellement en forme de coque renforcé en fibres de verre

(30) Priorität: 27.03.2012 DE 102012006038
(43) Veröffentlichungstag der Anmeldung: 02.10.2013
(73) Patentinhaber: MBB Fertigungstechnik GmbH, 48361 Beelen (DE)
(72) Erfinder: Bühlmeyer, Robert, 33442 Herzebrock-Clarholz (DE); Kukla, Cornelia, 99817 Eisenach (DE)
(74) Vertreter: Bittner, Thomas L.

(56) Entgegenhaltungen:
- EP-A1- 1 419 865
- EP-A1- 1 506 729
- US-A- 4 338 070
- US-A- 6 146 122
- US-A1- 2001 045 684
- US-A1- 2006 012 075
- US-A1- 2006 220 274
- US-A1- 2010 044 883

## Beschreibung

Die Erfindung betrifft ein Verfahren zur Herstellung eines im Wesentlichen schalenförmigen, faserverstärkten Kunststoffteils sowie ein Umformwerkzeug.

Schalenförmige, faserverstärkte Kunststoffteile der in Rede stehenden Art finden sich in zahlreichen technischen Anwendungsbereichen. Beispielhaft sei hier der Bereich der Strukturteile von Kraftfahrzeugen genannt. Schalenförmige, faserverstärkte Kunststoffteile werden beispielsweise für Säulen, Träger, Crashelemente, Sitze o. dgl. benötigt. Angesichts der immer komplizierter werdenden Formgestaltungen dieser Strukturteile stoßen die bekannten, umformenden Herstellungsverfahren zunehmend an ihre Grenzen. Dies gilt insbesondere vor dem Hintergrund, dass der Automatisierbarkeit und der Effizienz der Fertigung in der Automobilindustrie bei den dortigen hohen Stückzahlen ganz besondere Bedeutung zukommt.

Das bekannte Umformwerkzeug (EP 1 301 322 B1), von dem die Erfindung ausgeht, weist eine Obermatrize und eine Untermatrize auf, in das ein Materialzuschnitt mit einer Fasermatte eingelegt wird. Zum Festhalten des Materialzuschnitts ist ein die Untermatrize umgebender Spannrahmen vorgesehen. Nach dem Einlegen wird der Materialzuschnitt mit einem reaktionsfähigen Matrixharz flächendeckend besprüht, so dass der Materialzuschnitt von dem Matrixharz getränkt wird. Schließlich wird zum Umformen des Materialzuschnitts das Umformwerkzeug geschlossen.

Problematisch bei dem bekannten Umformwerkzeug ist die Tatsache, dass nur vergleichsweise flache Oberflächengestaltungen von Kunststoffteilen realisierbar sind. Vor allem bei Oberflächengeometrien mit großen Steigungen und/oder großen Höhenunterschieden ergibt sich stets das Problem der Faltenbildung, da sich der Materialzuschnitt je nach Zusammensetzung wie ein textilartiger Zuschnitt verhält.

Bei einem weiteren bekannten Umformwerkzeug (DE 198 29 352 A1) wird ein mit einer im Wesentlichen luftdichten Folie belegter Materialzuschnitt mittels Druckluft in eine Matrize gedrückt bzw. gezogen. Zwar lässt sich hiermit eine im Wesentlichen gleichmäßige Druckbeaufschlagung des Materialzuschnitts auch im Bereich von Steigungen in der Oberfläche des herzustellenden Kunststoffteils erreichen. Allerdings ist die Gestaltungsfreiheit insbesondere durch die Notwendigkeit der im Wesentlichen luftdichten Folie beschränkt. Ferner ist der Aufwand für die konstruktive Realisierung und für den Betrieb des Umformwerkzeugs beträchtlich.

Aus dem Dokument US 2001/0045684 A1 ist ein Verfahren zum Herstellen eines schalenförmigen, faserverstärkten Kunststoffteil bekannt, bei dem ein Umformwerkzeug mit einer Matrize und einer Gegenmatrize gebildet ist. Eine Gegenmatrize verfügt über ein oder mehrere Druckelemente, die im Rahmen des Umformprozesses nach dem Einlegen eines Materialzuschnitts in das Umformwerk nacheinander auf den eingelegten Materialzuschnitt zugestellt werden können, um anschließend das Umformwerkzeug zu schließen.

Umformwerkzeuge mit Matrize, an denen einzeln verstellbare umformende Segmente gebildet sind, sind weiterhin aus den Dokumenten US 2010/0044883 A1 sowie US 2006/022 0274 A1 bekannt.

Im Dokument US 6,146,122 ist ein Verfahren zum Herstellen eines schalenförmigen, faserverstärkten Kunststoffteils offenbart, bei dem ein auf einer Matrize des Umformwerkzeuges aufgelegter Materialzuschnitt in einem mittleren Bereich mit Hilfe einer Druckplatte geklemmt wird, bevor der Verbund aus Matrize und Druckplatte als Ganzes in die Gegenmatrize eingeführt wird. Die Druckplatte wird hierbei dann in einer zugeordneten Ausnehmung auf der Innenseite der Gegenmatrize formschlüssig eingefügt.

Der Erfindung liegt das Problem zugrunde, das Umformwerkzeug und das Verfahren derart auszugestalten und weiterzubilden, dass bei einfachem konstruktivem Aufbau auch komplizierte Oberflächengeometrien mit großen Steigungen und/oder großen Höhenunterschieden eines faserverstärkten Kunststoffteils realisierbar sind.

Das obige Problem wird durch ein Verfahren nach Anspruch 1 gelöst. Weiterhin ist ein Umformwerkzeug nach Anspruch 3 vorgesehen.

Wesentlich ist die grundsätzliche Überlegung, das Umformwerkzeug in umformende Segmente zu segmentieren und segmentweise oder in Gruppen von Segmenten in umformenden Eingriff mit dem Materialzuschnitt zu bringen. Dies bedeutet, dass zumindest ein erster Umformvorgang in mindestens zwei Schritten, nämlich segmentweise oder in Gruppen von Segmenten erfolgt.

Der Materialzuschnitt kann durch die Segmentierung des Umformwerkzeugs in einer vorbestimmten Reihenfolge lokal verformt werden. Die Segmente sind jeweils einem Oberflächenbereich des herzustellenden Kunststoffteils zugeordnet und bestimmen die Oberflächengeometrie dieses Oberflächenbereichs. Mit dieser Art der Segmentierung lässt sich bei entsprechender Auslegung ein gezielter umformender Eingriff mit dem Materialzuschnitt erreichen, wodurch einer Faltenbildung im Materialzuschnitt auf vielfältige Weise entgegengewirkt werden kann.

Der Eingriffsbereich zwischen Umformwerkzeug und Materialzuschnitt erweitert sich im Laufe des Umformvorgangs segmentweise oder in Gruppen von Segmenten zu einem Rand des Materialzuschnitts hin. Dies entspricht in erster Näherung einem "Glattstreichen" des Materialzuschnitts zu dessen Rand hin, auch wenn eine Streichbewegung entlang der Oberfläche des Materialzuschnitts nicht notwendigerweise erfolgt.

Es hat sich in Versuchen gezeigt, dass bereits der obige, sequentiell ausgelöste Eingriff der umformenden Segmente mit dem Materialzuschnitt auch bei komplizierten Oberflächengeometrien des Kunststoffteils eine Faltenbildung wirksam verhindert. Es ist erkannt worden, dass ein Glattstreichen im engeren Sinne mit einer Streichbewegung entlang der Oberfläche des Materialzuschnitts für ein gutes Umformergebnis nicht unbedingt erforderlich ist.

Der sequentiell ausgelöste Eingriff der umformenden Segmente mit dem Materialzuschnitt lässt sich auf konstruktiv besonders einfache Weise realisieren. Wesentlich dabei ist die Tatsache, dass die Segmente federnd an einem Trägerteil angeordnet sind. Während des Umformvorgangs erfolgt der umformende Eingriff segmentweise oder in Gruppen von Segmenten, was mit einem Einfedern der entsprechenden Segmente verbunden ist. Das Einfedern wiederum führt dazu, dass ein jeweils nächstes Segment oder eine jeweils nächste Gruppe von Segmenten in Eingriff mit dem Materialzuschnitt kommt. Durch diese Ausgestaltung lässt sich der sequentiell ausgelöste, umformende Eingriff der Segmente mit dem Materialzuschnitt auf denkbar einfache Weise umsetzen.

Der Umformvorgang kann zweigeteilt sein. Entsprechend erfolgt in einem ersten Schritt ein Vorumformen während des Einfederns der Segmente. Nachdem die Segmente gegen einen Anschlag gelaufen sind, folgt ein Endumformen mit einer Eingriffskraft, die ver - gleichsweise höher ist als die auf die Segmente beim Vorumformen wirkende Federkraft.

Bei dem vorschlagsgemäßen Verfahren wird zunächst ein Materialzuschnitt in ein Umformwerkzeug eingelegt, bei dem es sich vorzugsweise um das oben beschriebene, vorschlagsgemäße Umformwerkzeug handelt. Entsprechend wird das Umformwerkzeug nach dem Einlegen in umformenden Eingriff mit dem Materialzuschnitt gebracht. Der Materialzuschnitt besteht im Wesentlichen aus einem Fasermaterial.

Wesentlich nach der weiteren Lehre ist die Tatsache, dass das Umformwerkzeug segmentweise oder in Gruppen von Segmenten in umformenden Eingriff mit dem Materialzuschnitt gebracht wird. Auf alle Ausführungen zu dem vorschlagsgemäßen Umformwerkzeug, die geeignet sind, das vorschlagsgemäße Verfahren zu erläutern, darf verwiesen werden.

Im Folgenden wird die Erfindung anhand einer lediglich Ausführungsbeispiele darstellenden Zeichnung näher erläutert. In der Zeichnung zeigt jeweils in ganz schematischer Darstellung
- Fig. 1: ein vorschlagsgemäßes Umformwerkzeug a) bei eingelegtem Materialzuschnitt vor dem umformenden Eingriff mit dem Materialzuschnitt, b) während des Vorumformens, c) während des Endumformens, jeweils im Vertikalschnitt,
- Fig. 2: die Obermatrize des vorschlagsgemäßen Umformwerkzeugs gemäß Fig. 1 in der Ansicht A,
- Fig. 3: ein weiteres vorschlagsgemäßes Umformwerkzeug a) während des Vorumformens, b) während des Endumformens, jeweils in einem Vertikalschnitt.

Die in den Zeichnungen dargestellten, vorschlagsgemäßen Umformwerkzeuge dienen der Durchführung des vorschlagsgemäßen Verfahrens zur Herstellung eines im Wesentlichen schalenförmigen, faserverstärkten Kunststoffteils 1. Für das faserverstärkte Kunststoffteil 1 sind eine unbegrenzte Anzahl von Ausgestaltungen denkbar. Beispiele hierfür wurden im einleitenden Teil der Beschreibung gegeben.

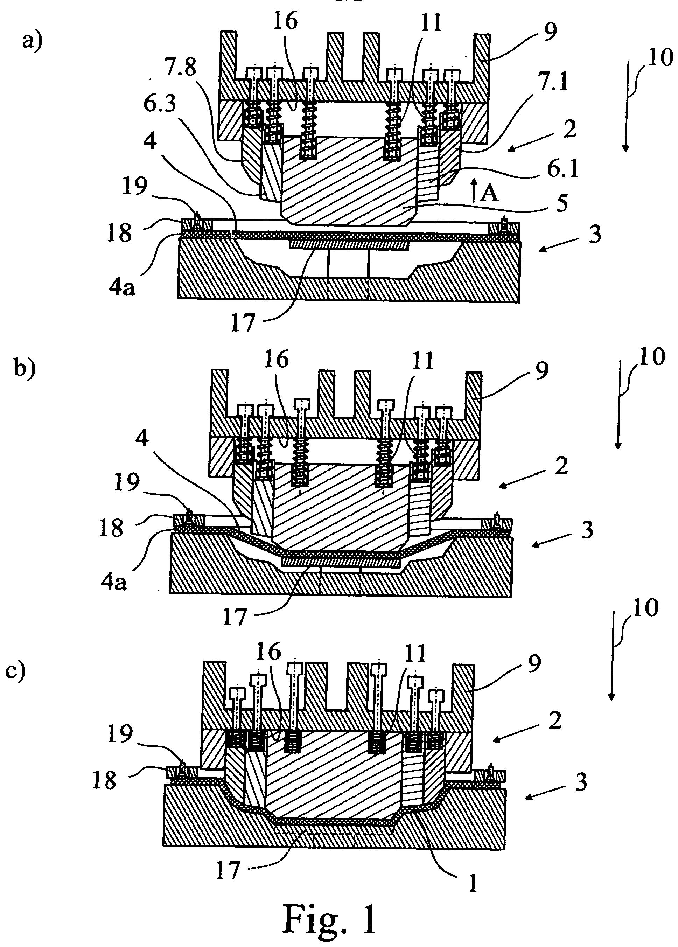

Das vorschlagsgemäße Umformwerkzeug ist mit einer Obermatrize 2 und einer Untermatrize 3 ausgestattet, wobei ein Materialzuschnitt 4 in üblicher Weise in das Umformwerkzeug einlegbar und das Umformwerkzeug anschließend in umformenden Eingriff mit dem Materialzuschnitt 4 bringbar ist. Hierfür wird das Umformwerkzeug geschlossen, vorzugsweise die Obermatrize 2 auf die Untermatrize 3 zugestellt. Den Ablauf der Umformung des Materialzuschnitts 4 zeigt Fig. 1.

Der Materialzuschnitt 4 ist hier im Wesentlichen ein Fasermaterial. Bei dem Fasermaterial kann es sich um irgendein Fasermaterial handeln, insbesondere um eine GFK-Matte oder um eine CFK-Matte. In besonders bevorzugter Ausgestaltung handelt es sich bei dem Materialzuschnitt allerdings um ein mit einem Matrix-Material imprägniertes Fasermaterial, also um ein Prepreg-Material. Vorzugsweise handelt es sich bei dem Prepreg-Material dann um ein CFK-Gewebe-Prepreg-Material. Grundsätzlich kann es sich bei dem Prepreg-Material je nach Anwendungsfall um beliebiges duroplastisches oder thermoplastisches Prepreg-Material oder um ein Trockenfasergelege oder - gewebe mit Thermoplastbinderanteil handeln.

Das vorschlagsgemäße Umformwerkzeug kann grundsätzlich zur Herstellung eines Kunststoffteils 1 dienen, das in einem nächsten Verfahrensschritt mittels eines Verdichtungswerkzeugs verdichtet und unter Wärmeeinfluss ausgehärtet wird. Dann handelt es sich bei dem mit dem vorschlagsgemäßen Umformwerkzeug hergestellten Kunststoffteil 1 um eine sogenannte "Preform". Denkbar ist aber auch, dass das vorschlagsgemäße Umformwerkzeug bereits beim Verdichten und ggf. Erkalten des Kunststoffteils 1 zur Anwendung kommt. Bei dem dargestellten und insoweit bevorzugten Ausführungsbeispiel geht es um die Herstellung einer Preform, was nicht beschränkend zu verstehen ist.

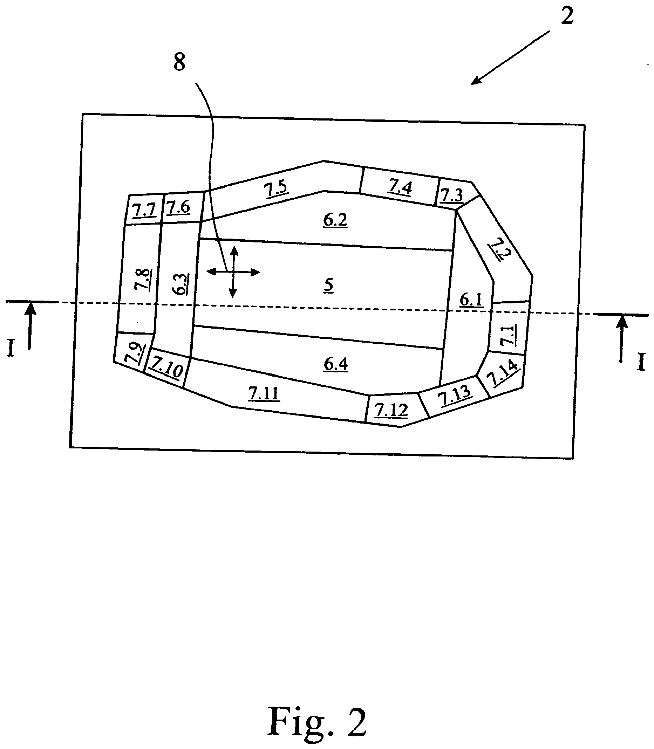

Wesentlich ist nun, dass das Umformwerkzeug hier und vorzugsweise die Obermatrize 2 des Umformwerkzeugs, in umformende Segmente 5-7 segmentiert ist. Im Sinne einer besseren Übersichtlichkeit sind die Segmente 5-7 in Fig. 2 zu insgesamt drei Segment-Konglomeraten zusammengefasst worden. Das erste Konglomerat besteht aus dem einen zentralen Segment 5, das bezogen auf die übrigen Segmente 6, 7 mittig angeordnet ist. Das zweite Konglomerat wird durch die Segmente 6.1, 6.2, 6.3 und 6.4 gebildet, die sich um das zentrale Segment 5 verteilen. Außen befinden sich schließlich die Segmente 7.1 - 7.14. Insgesamt besteht die Obermatrize 2 des vorschlagsgemäßen Umformwerkzeugs hier und vorzugsweise aus neunzehn einzelnen umformenden Segmenten.

Wesentlich ist nun weiter, dass das Umformwerkzeug, hier die Obermatrize 2 des Umformwerkzeugs, segmentweise in umformenden Eingriff mit dem Materialzuschnitt 4 bringbar ist. Dabei kann es auch vorgesehen sein, dass der umformende Eingriff in Gruppen von Segmenten 5-7 vorgenommen wird.

Mit dem vorschlagsgemäßen Umformwerkzeug lässt sich ein gezielter umformender Eingriff der einzelnen Segmente 5-7 mit dem Materialzuschnitt 4 erreichen. In besonders bevorzugter Ausgestaltung ist dieser umformende Eingriff derart steuerbar, dass sich der Eingriffsbereich zwischen dem Umformwerkzeug und dem Materialzuschnitt 4 im Laufe des Umformvorgangs segmentweise, ggf. auch in Gruppen von Segmenten 5-7, zu einem Rand 4a des Materialzuschnitts 4 hin erweitert. Bei den in Fig. 2 dargestellten Segmenten 5-7 würde dies vorzugsweise bedeuten, dass zunächst das zentrale Segment 5, anschließend die Segmente 6.1 - 6.4 und schließlich die Segmente 7.1 - 7.14 in umformenden Eingriff mit dem Materialzuschnitt 4 kommen. Dieses sequentielle Auslösen des Eingriffs der Segmente 5-7 mit dem Materialzuschnitt 4 führt zu dem oben angesprochenen Glattstreicheffekt für den Materialzuschnitt 4. Die Richtung des Glattstreichens von Innen nach Außen, also vom zentralen Segment 5 zu den jeweiligen Rändern 4a des Materialzuschnitts 4 hin, ist in Fig. 2 mit dem Bezugszeichen 8 angedeutet.

Interessant ist die Tatsache, dass sich der Glattstreicheffekt insbesondere bei einem Materialzuschnitt 4 aus einem Prepreg-Material als vorteilhaft herausgestellt hat. Solche Prepreg-Materialien weisen eine gewisse Zähigkeit auf, was im Falle einer Faltenbildung zu ganz erheblichen Oberfächenfehlern führen kann. In Versuchen hat sich mit dem vorschlagsgemäßen Umformwerkzeug bei PrepregMaterialien ein besonders ausgeprägter Glattstreicheffekt gezeigt. Um diesen Effekt zu unterstützen und insbesondere um die Umformbarkeit des Materialzuschnitts 4 zu verbessern, wird der Materialzuschnitt 4 vorzugsweise noch vor dem Einlegen in das Umformwerkzeug aufgeheizt.

Fig. 2 zeigt, dass die Segmente 5-7 unmittelbar aneinander angrenzen und zusammen eine Matrize 2, hier die Obermatrize 2, des Umformwerkzeugs ausbilden. Bei der Gegenmatrize 3 handelt es sich hier und vorzugsweise um die Untermatrize 3, die im Sinne eines einfachen konstruktiven Aufbaus bei dem dargestellten Ausführungsbeispiel unsegmentiert ausgestaltet ist. Denkbar ist aber, dass alternativ oder zusätzlich die Untermatrize 3 segmentiert ist.

Grundsätzlich kann es ausreichen, dass die obige Erweiterung des Eingriffsbereichs für die Erzielung des Glattstreicheffekts in nur einer einzigen Richtung vorgesehen ist. Hier und vorzugsweise ist dies allerdings zu allen Rändern des Materialzuschnitts 4 umgesetzt worden. Entsprechend ist es so, dass in einer Draufsicht auf die entsprechende formgebende Fläche des Umformwerkzeugs, hier auf die formgebende Fläche der Obermatrize 2, zumindest ein Teil der Umformende Segmente 5-7 in Ringen angeordnet sind, die jeweils in erster Näherung entlang des Randes 4a des Materialzuschnitts 4 verlaufen.

Bei dem in Fig. 2 dargestellten Ausführungsbeispiel ist das zentrale Umformsegment 5 von einem ersten Ring umgeben, der von den Segmenten 6.1 - 6.4 gebildet wird. Dieser erste Ring von einem weiteren Ring umgeben, der von den umformenden Segmenten 7.1 - 7.14 gebildet wird. In besonders bevorzugter Ausgestaltung ist es nun so, dass zunächst die Segmente eines inneren Rings und anschließend die Segmente eines äußeren Rings in umformenden Eingriff mit dem Materialzuschnitt 4 kommen, um den gewünschten Glattstreicheffekt zu erzielen. Dabei kommt es selbstredend nicht darauf an, welche Formgebung die Ringe im Einzelnen aufweisen.

Fig. 1 zeigt einen besonders einfachen konstruktiven Aufbau, mit dem der sequentielle Eingriff der umformenden Segmente 5-7 erreichbar ist. Wesentlich dabei ist zunächst, dass das Umformwerkzeug mindestens ein auf den eingelegten Materialzuschnitt 4 zustellbares Trägerteil 9 aufweist, an dem die Segmente 5-7 angeordnet sind.

Grundsätzlich wäre es denkbar, dass die Segmente 5-7 durch einzelne Aktuatoren gegenüber dem Trägerteil 9 verstellbar sind. Besonders einfach gestaltet sich die Anordnung aber dadurch, dass die Segmente 5-7 gegenüber dem Trägerteil 9 hier und vorzugsweise gegen Federkraft verstellbar sind. Bei dem in Fig. 1 dargestellten und insoweit bevorzugten Ausführungsbeispiel sind die Segmente 5-7 entlang der Zustellrichtung 10, insbesondere entgegen der Zustellrichtung 10, gegenüber dem Trägerteil 9 verstellbar. Dabei ist hier und vorzugsweise jedem einzelnen Segment 5-7 mindestens eine Federanordnung zugeordnet, die in Fig. 1 für zwei Segmente 5, 6.1 beispielhaft mit dem Bezugszeichen "11" angedeutet ist.

Die Anordnung ist nun so getroffen, dass ein Segment 5-7 oder eine Gruppe von Segmenten bei einem Zustellen des Trägerteils 9 auf den Materialzuschnitt 4 in Eingriff mit dem Materialzuschnitt 4 kommt und dabei einfedert und dass durch das Einfedern ein jeweils nächstes Segment 5-7 oder eine jeweils nächste Gruppe von Segmenten 5-7 in Eingriff mit dem Materialzuschnitt 4 bringbar ist. Bei der in Fig. 2 dargestellten Obermatrize 2 bedeutet dies, dass bei einem ersten Zustellen des Trägerteils 9 in Zustellrichtung 10 das zentrale Umformsegment 5 in Eingriff mit dem Materialzuschnitt 4 kommt (Fig. 1b)). Bei einem weiteren Zustellen des Trägerteils 9 wirkt über den Materialzuschnitt 4 eine hinreichende Gegenkraft entgegen der Zustellrichtung, so dass das zentrale Umformsegment 5 einfedert und ein nächstes Umformsegment 5-7, hier das Umformsegment 6.3 in Eingriff mit dem Materialzuschnitt 4 kommt. Nach einem weiteren Zustellen des Trägerteils 9 mit dem entsprechenden Einfedern des zentralen Umformsegments 5 und nun auch des Umformsegments 6.3 kommt schließlich das nächste Umformsegment 6.1 in Eingriff mit dem Materialzuschnitt 4. Bei fortlaufendem Zustellen des Trägerteils 9 kommen sukzessive die übrigen Segmente 5-7 in entsprechenden Eingriff mit dem Materialzuschnitt 4, so dass sich insgesamt der obige Glattstreicheffekt ergibt, ohne das aufwendige steuerungstechnische Maßnahmen getroffen werden müssen. Insgesamt ergibt sich der Glattstreicheffekt schlicht durch das sukzessive Einfedern der einzelnen Segmente 5-7.

Interessant bei der in Fig. 1 gezeigten konstruktiven Lösung ist die Tatsache, dass die Federvorspannungen der einzelnen Segmente 5-7 unterschiedlich gewählt werden können, so dass sich ggf. lokal unterschiedliche Eingriffskräfte ergeben. Auch dies kann bei entsprechender Auslegung einer Faltenbildung im Materialzuschnitt 4 entgegenwirken.

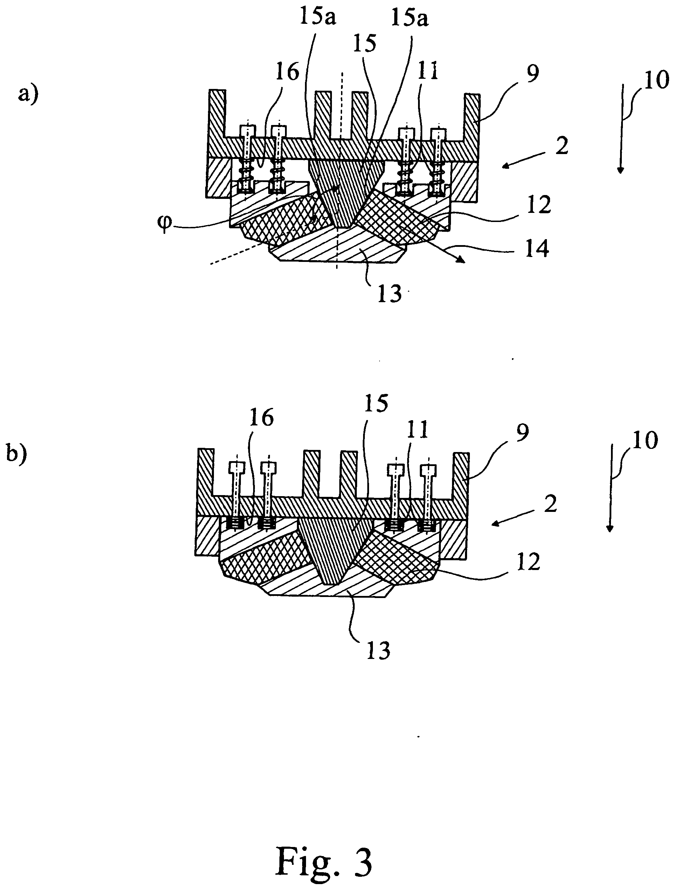

Bei dem in den Fig. 1 und 2 dargestellten und insoweit bevorzugten Ausführungsbeispiel erfolgt das Einfedern zumindest eines Segments 5-7, hier und vorzugsweise aller Segmente 5-7, entlang der Zustellrichtung 10. Alternativ oder zusätzlich kann es aber vorgesehen sein, dass das Einfedern gegenüber dem Trägerteil 9 zumindest eines Umformsegments 12 in einem Winkel ϕ zu der Zustellrichtung 10 erfolgt. Dies ist beispielhaft in Fig. 3 gezeigt. Es hat sich gezeigt, dass sich der Winkel ϕ vorzugsweise in einem Bereich von etwa 95° bis etwa 170° bewegen sollte.

Bei dem in Fig. 3 dargestellten und insoweit bevorzugten Ausführungsbeispiel ist das zentrale Umformsegment 13 entlang der Zustellrichtung 10 wieder federnd verstellbar. Dies ergibt sich aus einer Zusammenschau der Fig. 3a) und 3b). In dem zentralen Umformsegment 13 ist ein gegenüber der Zustellrichtung 10 winklig verstellbares Umformsegment 12 vorgesehen, dass hier als "Niederhalterschieber" bezeichnet wird. Der Niederhalterschieber 12 ist bei dem in Fig. 3 dargestellten Ausführungsbeispiel innerhalb des zentralen Umformsegments 13 entlang der Schieberichtung 14 verschiebbar. Bei einem Einfedern des zentralen Umformsegments 13 läuft der Niederhalterschieber 12 entlang einer schiefen Ebene 15a, die durch ein an dem Trägerteil 9 angeordneten Treiberbauteil 15 gebildet wird. Dies führt zu einer gleichzeitigen Verstellung des Niederhalterschiebers in Schieberichtung 14 und, bei gleichzeitigem Eingriff mit dem Materialzuschnitt 4, zu einer Kraftwirkung auf den Materialzuschnitt 4 entlang dessen Oberfläche, was einem Glattstreichen des Materialzuschnitts 4 im engeren Sinne mit einer entsprechenden Streichbewegung gleichkommt. Hier und vorzugsweise sind zwei Niederhalterschieber 12 vorgesehen, die bezogen auf eine vertikale Ebene spiegelsymmetrisch angeordnet sind. In entsprechender Weise ist auch das Treiberbauteil 25 mit zwei schiefen Ebenen 15a ausgestattet, die jeweils mit einem der Niederhalterschieber 12 zusammenwirken.

Aus dem in Fig. 3 dargestellten Ausführungsbeispiel ergibt sich, dass sich eine Kombination von umformenden Segmenten 13, 14 unterschiedlicher Verstellrichtungen auf konstruktiv besonders einfache Weise realisieren lässt. Bei entsprechender Auslegung lassen sich nahezu beliebige Oberflächengeometrien des herzustellenden Kunststoffteils 1 faltenfrei herstellen. Insbesondere ist es auch denkbar, mit einem obigen Niederhalterschieber 12 eine Oberflächengeometrie mit Hinterschnitten zu realisieren.

Bei dem dargestellten Ausführungsbeispiel handelt es sich bei dem Umformen des Materialzuschnitts 4 während des Einfederns der Segmente 5-7 um ein "Vorumformen" des Materialzuschnitts 4 mit vergleichsweise geringen Eingriffskräften, dem ein Endumformen des Materialzuschnitts 4 mit vergleichsweise höheren Eingriffskräften folgt. Hierfür ist es vorgesehen, dass das Einfedern der Segmente 5-7 jeweils gegen einen Anschlag 16 erfolgt, der hier und vorzugsweise von dem Trägerteil 9 gebildet wird. Entsprechend ist es so, dass während des Einfederns ein Vorumformen des Materialzuschnitts 4 und erst nach Erreichen des jeweiligen Anschlags 16 das Endumformen des Materialzuschnitts 4 möglich ist. Das Endumformen, bei dem hier und vorzugsweise alle Segmente 5-7 an dem Anschlag 16 anliegen, ist in Fig. 1c) dargestellt.

In Abhängigkeit davon, in welchem Abschnitt des Produktionsablaufs das vorschlagsgemäße Umformwerkzeug eingesetzt wird, kann es vorteilhaft sein, dass für die Segmente 5-7 eine Heizeinrichtung und/oder eine Kühleinrichtung vorgesehen ist bzw. sind, so dass die Segmente 5-7 entsprechend beheizbar bzw. kühlbar sind. In besonders bevorzugter Ausgestaltung ist das Beheizen bzw. Kühlen segmentweise oder jedenfalls in Gruppen von Segmenten möglich.

Während das Beheizen der Flexibilisierung oder dem gegebenenfalls lokalen Aushärten des Materialzuschnitts 4 dienen kann, lässt sich mit der ggf. lokalen Kühlung der Segmente 5-7 ein Versteifen des Materialzuschnitts 4 und eine gute Lösbarkeit des umgeformten Materialzuschnitts 4 von den formgebenden Oberflächen des Umformwerkzeugs erreichen, ohne dass eine chemische Aktivierung des Materialzuschnitts 4 erfolgt. Ein solches Versteifen kann insbesondere für die automatisierte Handhabung des ggf. in obiger Weise umgeformten Materialzuschnitts 4 vorteilhaft sein.

Das Beheizen bzw. Kühlen kann insbesondere dann eine wichtige Rolle spielen, wenn es sich bei dem Materialzuschnitt 4, wie bevorzugt, um ein Prepreg-Material handelt. Bei solchen Prepreg-Materialien lässen sich einerseits die Steifigkeit und andererseits das ggf. lokale Aushärten durch ein gezieltes Beheizen bzw. eine gezielte Kühlung steuern. Bei den Trockenfasergelegen mit Thermoplastanteil wird das gezielte Beheizen zur Bauteilstabilisierung genutzt. Im nachfolgenden Prozess wird das Trockenfasergelege durch ein z.B. RTM Prozess mit Harz benetzt und ausgehärtet.

Alternativ oder zusätzlich zu der Matrize 2 kann die Gegenmatrize 3, hier die Untermatrize 3, eine Heizeinrichtung und/oder eine Kühleinrichtung aufweisen, so dass die Untermatrize 3 entsprechend beheizbar bzw. kühlbar ist.

Das in Fig. 1 dargestellte Umformwerkzeug zeigt noch eine Besonderheit, die vor allem bei großflächigen Materialzuschnitten 4 vorteilhaft ist. Hier ist der Untermatrize 3 zumindest ein verstellbares Segment 17 zugeordnet, dass vorliegend als "Faltenhalter" bezeichnet wird. Der Faltenhalter 17 ist auf den Materialzuschnitt 4 zustellbar und verhindert ein gravitationsbedingtes Durchhängen des Materialzuschnitts 4 nach dessen Einlegen in das Umformwerkzeug. Hier und vorzugsweise ist der Faltenhalter in Richtung des Materialzuschnitts 4 gegen einen nicht dargestellte Anschlag vorgespannt, wobei ein Zustellen der Obermatrize 2 auf den Materialzuschnitt 4 mit einem ersten Anpressen des Materialzuschnitts 4 zwischen einem ersten Segment 5 der Obermatrize 2 und dem Faltenhalter 17 einhergeht (Fig. 1b)) und wobei bei einem weiteren Zustellen der Obermatrize 2 der Faltenhalter 17 hier und vorzugsweise vollständig in die Untermatrize 3 einfedert (Fig. 1c)). Voreilhafterweise sorgt der Falterhalter 17 dafür, dass während des Eingriffs des zentralen Segments 5 nicht bereits eine ungewünschte Faltenbildung auftritt.

Das vorschlagsgemäße Umformwerkzeug garantiert eine hohe Prozessstabilität, ohne dass insbesondere beim Einlegen des Materialzuschnitts 4 Korrekturen werden müssen. Entsprechend ist vorzugsweise ein Handhabungsgerät 18 für die Handhabung des Materialzuschnitts 4, insbesondere für das Einlegen des Materialzuschnitts 4 in das Umformwerkzeug, vorgesehen. Hierfür eignet sich ein einfacher, zur Handhabung verfahrbarer Spannrahmen, an dem der Materialzuschnitt 4 mittels Vakuumgreifern 19 fixierbar ist.

Mittels des Spannrahmens 18 lässt sich der Materialzuschnitt 4 auf einfache Weise im Umformwerkzeug positionieren, wobei die Positionierung hier und vorzugsweise zwischen den beiden Matrizen 2, 3 des Umformwerkzeugs erfolgt. Nach dem Positionieren des Materialzuschnitts 4 mittels des Handhabungsgeräts 18 werden die Vakuumgreifer 19 deaktiviert, so dass der Materialzuschnitt 4 "schwimmend" in das Umformwerkzeug eingelegt ist. Der Begriff schwimmend" bedeutet, dass der Materialzuschnitt 4 in Fig. 1 seitlich frei verschieblich ist, so dass während des umformenden Eingriffs Material der Ränder 4a des Materialzuschnitts 4 zum dem jeweils aktuellen Eingriffsbereich hin nachrücken kann.

Nach einer weiteren Lehre, der ebenfalls eigenständige Bedeutung zukommt, wird das oben erläuterte Verfahren zur Herstellung eines im Wesentlichen schalenförmigen, faserverstärkten Kunststoffteils 1 beansprucht, das vorteilhafterweise mit dem vorschlagsgemäßen Umformwerkzeug durchgeführt wird. Auf alle obigen Erläuterungen zu dem Betrieb des vorschlagsgemäßen Umformwerkzeugs, die geeignet sind, das vorschlagsgemäße Verfahren zu erläutern, darf verwiesen werden.

Es darf noch darauf hingewiesen werden, dass das vorschlagsgemäße Verfahren und das vorschlagsgemäße Umformwerkzeug im Rahmen mehrstufiger Prozesse Einsatz finden können. Bei hochkomplexen Bauteilen beispielsweise können bei gleicher Untermatrize 3 sequentiell unterschiedliche Obermatrizen 2 mit jeweils unterschiedlichen Umformsegmenten 5-7 eingesetzt werden.

Desweiteren können bei gleicher Untermatrize 3 unterschiedliche Lagen oder auch Einleger eingebracht und diese mit neuen Lagen und unterschiedlichen Obermatrizen 2 weiter geformt werden. Im letzten Schritt wird dann der vorzugsweise gekühlte Materialzuschnitt 2 aus der Untermatrize 3 entnommen und vorzugsweise in ein Aushärtewerkzeug zum Aushärten eingelegt. Alle genannten Arbeitsschritte lassen sich vorzugsweise automatisiert umsetzen.

## Patentansprüche

1. Verfahren zur Herstellung eines im Wesentlichen schalenförmigen, faserverstärkten Kunststoffteils (1), bei dem:
- ein Materialzuschnitt (4), welcher im Wesentlichen aus einem Fasermaterial besteht, in ein Umformwerkzeug mit einer Matrize (2) und einer Gegenmatrize (3) eingelegt wird, und
- das Umformwerkzeug, bei dem die Matrize (2) in umformende Segmente (5-7) segmentiert ist, anschließend segmentweise oder in Gruppen von Segmenten in umformenden Eingriff mit zumindest einem Teil des Materialzuschnitts (4) gebracht wird, derart, dass sich der Eingriffsbereich im Laufe des Umformvorgangs segmentweise oder in Gruppen von Segmenten zu einem Rand (4a) des Materialzuschnitts (4) hin erweitert,
**dadurch gekennzeichnet, dass**
- ein Faltenhalter, nämlich zumindest ein verstellbares Segment (17) an der Gegenmatrize (3), auf den Materialzuschnitt (4) zugestellt und / oder in Richtung des eingelegten Materialzuschnitts (4) vorgespannt wird, derart, dass ein gravitationsbedingtes Durchhängen des Materialzuschnitts (4) nach dessen Einlegen in das Umformwerkzeug verhindert wird,
- ein Zustellen der Matrize (2) auf den eingelegten Materialzuschnitt (4) mit einem ersten Anpressen des Materialzuschnitts (4) zwischen einem ersten umformenden Segment (5) der Matrize (2) und dem Faltenhalter (17) einhergeht, und
- bei einem weiteren Zustellen der Matrize (2) der Faltenhalter (17) in die Gegenmatrize (3) einfedert und weitere umformende Segment (6, 7) sukzessive mit dem Materialzuschnitt (4) in Eingriff kommen und sukzessive einfedern.

2. Verfahren nach Anspruch 1, **dadurch gekennzeichnet, dass** der Materialzuschnitt (4) aus einem mit einem Matrix-Material imprägnierten Fasermaterial - Prepregmaterial - oder aus einem Trockenfasergelege oder -gewebe mit Thermoplastmatrixanteil besteht.

3. Umformwerkzeug zur Herstellung eines im Wesentlichen schalenförmigen, faserverstärkten Kunststoffteils (1), wobei ein Materialzuschnitt (2) im Wesentlichen aus Fasermaterial in das Umformwerkzeug einlegbar ist und das Umformwerkzeug anschließend in umformenden Eingriff mit dem Materialzuschnitt (2) bringbar ist, aufweisend eine Matrize (2) und eine Gegenmatrize (3), wobei die Matrize in umformende Segmente (5-7) segmentiert ist, die anschließend an das Einlegen des Materialzuschnitts (2) segmentweise oder in Gruppen von Segmenten in umformenden Eingriff mit zumindest einem Teil des Materialzuschnitts (4) gebracht werden können, derart, dass sich der Eingriffsbereich im Laufe des Umformvorgangs segmentweise oder in Gruppen von Segmenten zu einem Rand (4a) des Materialzuschnitts (4) hin erweitert, **dadurch gekennzeichnet, dass** ein Faltenhalter, nämlich zumindest ein verstellbares Segment (17) an der Gegenmatrize (3), vorgesehen ist, der auf den Materialzuschnitt (4) zustellbar und / oder in Richtung des eingelegten Materialzuschnitts (4) vorgespannt ist, derart, dass ein gravitationsbedingtes Durchhängen des Materialzuschnitts (4) nach dessen Einlegen in das Umformwerkzeug verhindert ist, dass ein Zustellen der Matrize (2) auf den eingelegten Materialzuschnitt (4) mit einem ersten Anpressen des Materialzuschnitts (4) zwischen einem ersten umformenden Segment (5) der Matrize (2) und dem Faltenhalter (17) einhergeht, und dass bei einem weiteren Zustellen der Matrize (2) der Faltenhalter (17) in die Gegenmatrize (3) einfedert und weitere umformende Segment (6, 7) sukzessive mit dem Materialzuschnitt (4) in Eingriff kommen und sukzessive einfedern.

4. Umformwerkzeug nach Anspruch 3, **dadurch gekennzeichnet, dass** in einer Draufsicht auf die entsprechende formgebende Fläche des Umformwerkzeugs zumindest ein Teil der Segmente (5-7) in Ringen angeordnet sind, die jeweils in erster Näherung entlang eines Randes (4a) des Materialzuschnitts (4) verlaufen.

5. Umformwerkzeug nach Anspruch 3 oder 4, **dadurch gekennzeichnet, dass** das Umformwerkzeug mindestens ein auf den Materialzuschnitt (4) zustellbares Trägerteil (9) aufweist, an dem die Segmente (5-7) angeordnet sind.

6. Umformwerkzeug nach Anspruch 5, **dadurch gekennzeichnet, dass** die Segmente (5-7) gegenüber dem Trägerteil (9) gegen Federkraft verstellbar sind und dass ein Segment (5-7) oder eine Gruppe von Segmenten (5-7) bei einem Zustellen des Trägerteils (9) auf den Materialzuschnitt (4) in Eingriff mit dem Materialzuschnitt (4) kommt und dabei einfedert und dass durch das Einfedern ein jeweils nächstes Segment (5-7) oder eine jeweils nächste Gruppe von Segmenten (5-7) in Eingriff mit dem Materialzuschnitt (4) bringbar ist.

7. Umformwerkzeug nach Anspruch 6, **dadurch gekennzeichnet, dass** das Einfedern zumindest eines Segments (5-7) entlang der Zustellrichtung (10) erfolgt und / oder, dass das Einfedern zumindest eines Segments (5-7) in einem Winkel (ϕ) zu der Zustellrichtung (10) erfolgt.

8. Umformwerkzeug nach Anspruch 6 oder 7, **dadurch gekennzeichnet, dass** das Einfedern der Segmente (5-7) jeweils gegen einen Anschlag (16) erfolgt, so dass während des Einfederns ein Vorumformen des Materialzuschnitts (4) und nach Erreichen des jeweiligen Anschlags (16) ein Endumformen des Materialzuschnitts (4) möglich ist.

9. Umformwerkzeug nach einem der Ansprüche 3 bis 8, **dadurch gekennzeichnet, dass** für die Segmente (5-7) eine Heizeinrichtung und / oder eine Kühleinrichtung vorgesehen ist bzw. sind, so dass die Segmente (5-7) beheizbar bzw. kühlbar sind.

10. Umformwerkzeug nach einem der Ansprüche 3 bis 9, **dadurch gekennzeichnet, dass** für die Gegenmatrize (3) eine Heizeinrichtung und / oder eine Kühleinrichtung vorgesehen ist bzw. sind, so dass die Gegenmatrize (3) beheizbar bzw. kühlbar ist.

11. Umformwerkzeug nach einem der Ansprüche 3 bis 10, dadurch **gekennzeich**n e t, dass ein Handhabungsgerät (18) vorgesehen ist, durch das der Materialzuschnitt (4) im Umformwerkzeug positionierbar ist.

## Claims

1. A method for producing a substantially shell-shaped, fiber-reinforced plastic part (1), comprising:
- placing a material blank (4), made substantially of a fibrous material, into a shaping tool comprising an upper die (2) and a lower die (3), and
- bringing the shaping tool, wherein the upper die (2) is segmented into shaping segments (5-7), in segments or in groups of segments into shaping engagement with at least part of the material blank (4), such that the engagement region expands, in segments or in groups of segments, toward an edge (4a) of the material blank (4) over the course of the shaping process;
**characterized in that**
- a fold holder, namely at least one displaceable segment (17) on the lower die (3), is moved toward the material blank (4) and/or is preloaded in the direction of the material blank (4), such that a sagging of the material blank (4) due to the force of gravity after the material blank (4) is placed in the shaping tool is prevented,
- an advancing of the die (2) toward the material blank (4) initially presses the material blank (4) between a first shaping segment (5) of the die (2) and the fold holder (17), and
- the fold holder (17) deflects inwardly in the lower die (3) and further shaping segments (5-7) come successively in contact with the material blank (4) and successively deflect inwardly as the die (2) is advanced further.

2. The method according to claim 1, wherein the material blank (4) is made of a fibrous material impregnated with a matrix material - prepreg material - or a dry fibrous scrim or fabric having a thermoplastic matrix portion.

3. A shaping tool for producing a substantially shell-shaped, fiber-reinforced plastic part (1), wherein a material blank (4), made substantially of a fibrous material, is placeable into a shaping tool comprising an upper die (2) and a lower die (3), wherein the shaping tool is provideable in shaping contact with the material blank (4), wherein the upper die (2) is segmented into shaping segments (5-7), which segments or in groups of segments are placeable in shaping engagement with at least part of the material blank (4), such that the engagement region expands, in segments or in groups of segments, toward an edge (4a) of the material blank (4) over the course of the shaping process; **characterized in that** a fold holder, namely at least one displaceable segment (17) on the lower die (3), is provided, which is movable toward the material blank (4) and/or is preloaded in the direction of the material blank (4), such that a sagging of the material blank (4) due to the force of gravity after the material blank (4) is placed in the shaping tool is prevented, an advancing of the die (2) toward the material blank (4) initially presses the material blank (4) between a first shaping segment (5) of the die (2) and the fold holder (17), and the fold holder (17) deflects inwardly in the lower die (3) and further shaping segments (5-7) come successively in contact with the material blank (4) and successively deflect inwardly as the die (2) is advanced further.

4. The shaping tool according to claim 3, wherein in a top view on the shaping area of the shaping tool at least a portion of the segments (5-7) is arranged in rings extending approximately along an edge (4a) of the material blank (4) to be shaped.

5. The shaping tool according to claim 3 or 4, further comprising at least one carrier part (9) that is moveable toward the material blank (4) to be shaped and on which the segments (5-7) are disposed.

6. The shaping tool according to claim 5, wherein segments (5-7) are displaced relative to the carrier part (9) against a spring force, wherein one or a group of segments (5-7) enters into engagement with the material blank (4) to be shaped as the carrier part (9) is moved toward the material blank (4) and thereby deflects inwardly, and wherein the inward spring deflection brings a particular subsequent segment (5-7) or a particular subsequent group of segments (5-7) into engagement with the material blank (4).

7. The shaping tool according to claim 6, wherein the inward deflection of at least one segment (5-7) takes place along with the advancing direction (10) and/or at an angle (ϕ) with respect to the advancing direction (10).

8. The shaping tool according to claim 6 or 7, wherein each of the segments (5-7) deflects inwardly against a stop (16), thereby enabling the material blank (4) to be pre-shaped during the inward deflection and to undergo final shaping once the particular stop (16) is reached.

9. The shaping tool according to one of the claims 3 to 8, wherein a heating device and/or a cooling device is provided for the segments (5-7), thereby permitting the segments (5-7) to be heated and/or cooled.

10. The shaping tool according to one of the claims 3 to 9, further comprising a heating device and/or a cooling device for the counter die (3) to enable heating/cooling.

11. The shaping tool according to one of the claims 3 to 9, further comprising a handling device (18) for positioning the material blank (4) in the shaping tool.

## Revendications

1. Procédé destiné à fabriquer une pièce en matière plastique (1) sensiblement en forme de coupe, renforcée par fibres, lors duquel
- on insère un coupon de matière (4) qui est essentiellement constitué d'une matière fibreuse dans un outil de façonnage avec une matrice (2) et une contre-matrice (3) et
- on amène ensuite, par segments ou groupes de segments, l'outil de façonnage, sur lequel la matrice (2) est segmentée en segments (5-7) de façonnage en engagement de façonnage avec au moins une partie du coupon de matière (4), de sorte qu'au cours du processus de façonnage, la zone d'engagement s'élargisse segment par segment ou par groupes de segments en direction d'un bord (4a) du coupon de matière (4),
**caractérisé en ce**
- **qu'**on approche un fixateur de plis, à savoir au moins un segment (17) ajustable de la contre-matrice (3), sur le coupon de matière (4) et/ou on le précontraint dans la direction du coupon de matière (4) inséré, de telle sorte qu'un fléchissement du coupon de matière (4) dû à la gravitation soit empêché après l'insertion de celui-ci dans l'outil de façonnage,
- **qu'**une approche de la matrice (2) du coupon de matière (4) inséré soit provoquée par une première pression du coupon de matière (4) entre un premier segment (5) de façonnage de la matrice (2) et le fixateur de plis (17) et
- **que** lors d'une approche supplémentaire de la matrice (2), le fixateur de plis (17) effectue un débattement dans la contre-matrice (3) et d'autres segments (6, 7) de façonnage s'engagent successivement dans le coupon de matière (4) et effectuent successivement un débattement.

2. Procédé selon la revendication 1, **caractérisé en ce que** le coupon de matière (4) est constitué d'une matière fibreuse (matière pré-imprégnée) imprégnée d'une matière de matrice ou d'une structure ou d'un tissu en fibres sèches, avec une part de matrice thermoplastique.

3. Outil de façonnage destiné à fabriquer une pièce en matière plastique (1) sensiblement en forme de coupe, un coupon de matière (2) sensiblement en matière fibreuse étant insérable dans l'outil de façonnage et l'outil de façonnage pouvant être amené ensuite en engagement de façonnage avec le coupon de matière (2), comportant une matrice (2) et une contre-matrice (3), la matrice étant segmentée en des segments (5-7) de façonnage qui à la suite de l'insertion du coupon de matière (2) peuvent être amenés segment par segment ou en groupes de segments en engagement de façonnage avec au moins une partie du coupon de matière (4), de telle sorte que la zone d'engagement s'élargisse segment par segment ou par groupes de segments en direction d'un bord (4a) du coupon de matière (4),
**caractérisé en ce qu'**il est prévu sur la contre-matrice (3) un fixateur de plis, à savoir au moins un segment (17) ajustable qui peut être approche du coupon de matière (4) et/ou qui est précontraint en direction du coupon de matière (4) inséré, de telle sorte qu'un fléchissement du coupon de matière (4) dû à la gravitation soit empêché après l'insertion de celui-ci dans l'outil de façonnage, qu'une approche de la matrice (2) du coupon de matière (4) inséré soit provoquée par une première pression du coupon de matière (4) entre un premier segment (5) de façonnage de la matrice (2) et le fixateur de plis (17) et que lors d'une approche supplémentaire de la matrice (2), le fixateur de plis (17) effectue un débattement dans la contre-matrice (3) et d'autres segments (6, 7) de façonnage s'engagent successivement dans le coupon de matière (4) et effectuent successivement un débattement.

4. Outil de façonnage selon la revendication 3, **caractérisé en ce que** dans une vue en élévation sur la surface de façonnage correspondante de l'outil de façonnage, au moins une partie des segments (5-7) est placée dans des anneaux qui s'écoulent respectivement dans une première approximation le long d'un bord (4a) du coupon de matière (4).

5. Outil de façonnage selon la revendication 3 ou 4, **caractérisé en ce que** l'outil de façonnage comporte au moins une partie porteuse (9) susceptible d'être approchée du coupon de matière (4), sur laquelle sont placés les segments (5-7).

6. Outil de façonnage selon la revendication 5, **caractérisé en ce que** les segments (5-7) sont ajustables par rapport à la partie porteuse (9) contre une force de ressort et **en ce que** lors d'une approche de la partie porteuse (9) vers le coupon de matière (4), un segment (5-7) ou un groupe de segments (5-7) arrive en engagement avec le coupon de matière (4) et effectue de ce fait un débattement et **en ce que** par le débattement, un prochain segment (5-7) respectif ou un groupe suivant respectif de segments (5-7) peut être amené en engagement avec le coupon de matière (4).

7. Outil de façonnage selon la revendication 6, **caractérisé en ce que** le débattement d'au moins un segment (5-7) s'effectue le long de la direction d'approche (10) et/ou **en ce que** le débattement d'au moins un segment (5-7) s'effectue sous un angle (ϕ) par rapport à la direction d'approche (10).

8. Outil de façonnage selon la revendication 6 ou 7, **caractérisé en ce que** le débattement des segments (5-7) s'effectue chaque fois à l'encontre d'une butée (16), de sorte que pendant le débattement, un préfaçonnage du coupon de matière (4) et après l'atteinte de la butée (16) concernée, un façonnage final du coupon de matière (4) soit possible.

9. Outil de façonnage selon l'une quelconque des revendications 3 à 8, **caractérisé en ce que** pour les segments (5-7), il est prévu un système de chauffage et/ou un système de refroidissement, de sorte que les segments (5-7) puissent être chauffés ou refroidis.

10. Outil de façonnage selon l'une quelconque des revendications 3 à 9, **caractérisé en ce que** pour la contre-matrice (3), il est prévu un système de chauffage et/ou un système de refroidissement, de sorte que la contre-matrice (3) puisse être chauffée ou refroidie.

11. Outil de façonnage selon l'une quelconque des revendications 3 à 10, **caractérisé en ce qu'**il est prévu un instrument de manipulation (18) grâce auquel le coupon de matière (4) est positionnable dans l'outil de façonnage.
